# EUROPEAN PATENT APPLICATION

(11) **EP 4 769 782 A1**
(43) Date of publication of application: **01.07.2026**
(21) Application number: 25745249.0
(22) Date of filing: 24.01.2025
(51) Int. Cl.: H01M 50/414, H01M 50/491, H01M 50/463, H01M 50/46, H01M 50/107

(54) **SEPARATOR, ELECTRODE ASSEMBLY COMPRISING SAME, AND BATTERY CELL COMPRISING SAME**

(30) Priority: 26.01.2024 KR 20240012500
(71) Applicant: LG Energy Solution, Ltd., Seoul 07335 (KR)
(72) Inventor: KIM, Ji-Yeon, Daejeon 34122 (KR); LEE, So-Yeong, Daejeon 34122 (KR); BAK, Byeong-Chan, Daejeon 34122 (KR); BAE, Kyeong-Hui, Daejeon 34122 (KR); BAE, Won-Sik, Daejeon 34122 (KR); SUNG, In-Hyouk, Daejeon 34122 (KR); SHIN, Jin-Young, Daejeon 34122 (KR)
(74) Representative: Hoffmann Eitle
(86) International application number: PCT/KR2025/001504
(87) International publication number: WO 2025/159583

(57) **Abstract**

A separator according to one embodiment of the present disclosure includes a porous polymer substrate; and porous coating layers formed on both surfaces of the porous polymer substrate. The separator has one end A and the other end A' in the longitudinal direction, and a point B is present between one end A and the other end A'. The thickness of the separator is constantly maintained from one end A to the other end A'. In a region AB from one end A to the point B, the thicknesses of the porous polymer substrate and the porous coating layers are constantly maintained. In a region BA' from the point B to the other end A', the thickness of the porous polymer substrate is decreased, and the thicknesses of the porous coating layers are increased.

## Description

### TECHNICAL FIELD

The present disclosure relates to a separator, an electrode assembly including the same, and a battery cell including the same.

This application is based on and claims priority from Korean Patent Application No. 10-2024-0012500, filed on January 26, 2024, with the Korean Intellectual Property Office, the disclosure of which is incorporated herein in its entirety by reference.

### BACKGROUND ART

As the demand for technological development for mobile devices increases, the demand for secondary batteries as an energy source is rapidly increasing. Secondary batteries are gaining considerable attention, as energy sources for power devices such as electric bicycles, electric vehicles, and hybrid electric vehicles as well as for mobile devices such as portable telephones, digital cameras, notebook computers, and wearable devices.

Depending on the shape of a battery casing, the secondary batteries are classified into cylindrical batteries in which an electrode assembly is embedded in a cylindrical metal can, prismatic batteries in which an electrode assembly is embedded in a prismatic metal can, and pouch-type batteries in which an electrode assembly is embedded in a pouch-type casing made of an aluminum laminate sheet. Among these, the cylindrical battery has the advantages of relatively large capacity and structural stability.

### DISCLOSURE

### Technical Problem

The present disclosure provides a separator, an electrode assembly including the same, and a battery cell including the same. In the electrode assembly, electrodes are wound with the separator being interposed therebetween. In the battery cell in which the electrode assembly is embedded in a cylindrical battery housing, the impingement occurring when the separator is pressed can be prevented, thereby improving the stability.

### Technical Solution

According to one aspect of the present disclosure, provided are the separator of the following embodiment, an electrode assembly including the same, and a battery cell including the same.

According to a first embodiment, provided is a separator that includes a porous polymer substrate; and porous coating layers formed on both surfaces of the porous polymer substrate and containing inorganic particles and a binder polymer. The separator has one end A and the other end A' in the longitudinal direction, and a point B is present between the one end A and the other end A'. The thickness of the separator is constantly maintained from the one end A to the other end A'. In a region AB from the one end A to the point B, the thicknesses of the porous polymer substrate and the porous coating layers are constantly maintained. In a region BA' from the point B to the other end A', the thickness of the porous polymer substrate is decreased, and the thicknesses of the porous coating layers are increased.

According to a second embodiment, in the first embodiment, interfaces between the porous polymer substrate and the porous coating layers with respect to a vertical line at a center in the longitudinal direction may have asymmetrical interfacial shapes.

According to a third embodiment, in any one of the first and second embodiments, with respect to the vertical line at the center in the thickness direction of the separator, the interfaces between the porous polymer substrate and the porous coating layers may have symmetrical shapes.

According to a fourth embodiment, in any one of the first to third embodiments, in the region BA' from the point B to the other end A', the thickness of the porous polymer substrate may be linearly decreased, and the thickness of the porous coating layer may be linearly increased.

According to a fifth embodiment, in any one of the first to fourth embodiments, the length from the one end A to the point B may be about 10% to 70% relative to the length of 100% in the longitudinal direction of the separator.

According to a sixth embodiment, in any one of the first to fifth embodiments, the thickness of the porous polymer substrate at the other end A' may be about 75% to 95% relative to the thickness of 100% of the porous polymer substrate at the one end A.

According to a seventh embodiment, in any one of the first to sixth embodiments, the content of the porous coating layer in the region BA' may be about 40 parts by weight to 1300 parts by weight relative to the porous coating layer of 100 parts by weight in the region AB.

According to an eighth embodiment, in any one of the first to seventh embodiments, the content of the porous coating layer may be about 40 parts by weight to 60 parts by weight relative to the porous polymer substrate of 100 parts by weight.

According to a ninth embodiment, in any one of the first to eighth embodiments, the total length of the separator in the longitudinal direction may be about 1.5 m to 5 m.

According to a tenth embodiment, provided is an electrode assembly including the separator according to any one of the first to ninth embodiments; a first electrode in contact with one surface of the separator; and a second electrode in contact with the other surface of the separator, in which the first electrode, the separator and the second electrode are wound in a direction of the other end A' of the separator as a winding axis.

According to an eleventh embodiment, in the tenth embodiment, the winding length of the electrode assembly may be about 1.5 m to 5 m.

According to a twelfth embodiment, in any one of the tenth to eleventh embodiments, in the electrode assembly, the first electrode, the separator and the second electrode may be stacked in this order.

According to a thirteenth embodiment, provided is a battery cell in which the electrode assembly according to any one of the tenth to twelfth embodiments is mounted in a cylindrical battery housing together with an electrolyte.

According to a fourteenth embodiment, in the thirteenth embodiment, the form factor of the cylindrical battery housing may be 46110, 46800, 46950, 48110, 48750 or 48800.

### Advantageous Effects

The separator according to one embodiment of the present disclosure may have excellent mechanical properties. When the separator is wound together with electrodes and is mounted in a cylindrical battery housing, it is possible to prevent or suppress impingement that occurs when the separator is pressed due to volume expansion during charging/discharging of the electrodes at the center.

In the battery cell including the electrode assembly according to one embodiment of the present disclosure, the mechanical properties of the separator are excellent at the center, so that it is possible to prevent or suppress the internal short circuit of the battery.

### DESCRIPTION OF DRAWINGS

FIG. 1 schematically illustrates the structure of a separator according to one embodiment of the present disclosure.
FIG. 2 schematically illustrates the structure of the separator according to one embodiment of the present disclosure, in which an imaginary vertical line is drawn at the center in the longitudinal direction of the separator.
FIG. 3 schematically illustrates the structure of the separator according to one embodiment of the present disclosure, in which an imaginary vertical line is drawn at the center in the thickness direction of the separator.
FIG. 4 is a view for explaining a battery pack including a battery cell according to one embodiment of the present disclosure.
FIG. 5 is a view for explaining a vehicle including a battery pack according to one embodiment of the present disclosure.

In some of the attached drawings, corresponding components are given the same reference numerals. Those skilled in the art would appreciate that the drawings depict elements simply and clearly and have not necessarily been drawn to scale. For example, to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### BEST MODE

Terms or words used in the present specification and claims should not be limitedly construed as usual or dictionary meanings, and should be interpreted as meanings and concepts consistent with the technical idea of the present disclosure on the basis of the principle that the inventor can appropriately define the concept of the term in order to explain his/her own invention in the best way.

The terms used in this specification are only used to illustrate exemplary embodiments, and are not intended to limit the present disclosure. The singular expression includes the plural expression unless the context clearly indicates otherwise.

### <Definition>

Throughout the present specification, when it is said that a certain part "includes" a certain component, this means that the certain part may further include other components rather than excluding other components unless specifically stated to the contrary.

Also, the terms "substantially" etc. used throughout the present specification are used to mean the corresponding numerical values or the approximations of the numerical values when inherent manufacturing and material tolerances are presented in the mentioned meaning, and are used to prevent unscrupulous infringers from unfairly using the disclosed contents in which precise or absolute figures are mentioned to aid the understanding of the present application.

In the present specification, D₅₀ refers to a particle diameter at the point of 50% in the particle diameter-based cumulative distribution of the number of particles. Also, D₁₀ refers to a particle diameter at the point of 10% in the particle diameter-based cumulative distribution of the number of particles, and D₉₀ refers to a particle diameter at the point of 90% in the particle diameter-based cumulative distribution of the number of particles. The particle diameter may be measured by using a laser diffraction method. For example, measurement target powder is dispersed in a dispersion medium, and then is introduced into a commercially available laser diffraction particle size measurement device (e.g., MICROTRAC S3500). Then, when the particles pass through laser beam, the particle size distribution is calculated by measuring the difference in the diffraction pattern according to the particle size. D₁₀, D₅₀ and D₉₀ may be measured, respectively, by calculating the particle diameters at points of 10%, 50% and 90% in the particle diameter-based cumulative distribution of the number of particles, in the measuring device.

Specific terms used in the following detailed description of the invention are for convenience and are not intended to limit the present disclosure. Also, words representing directions such as up, down, left, right, front, back, inside, and outside indicate directions in the drawings to which reference is made, or indicate directions toward or away from the geometric center of the designated device, system, or members thereof, respectively.

Throughout the present specification, the "longitudinal direction (mechanical direction MD)" of the separator means a direction having a longer length between horizontal and vertical lengths of the separator. For example, the separator is a strip-shaped separator having an aspect ratio of 1 or more, or an aspect ratio exceeding 1, and then two or more unit electrodes are disposed on the separator. Here, the longitudinal direction refers to the direction in which the unit electrodes are disposed. In general, the "longitudinal direction" of the separator may coincide with the travel direction of the separator or the electrode assembly in the manufacturing process of the separator or the manufacturing process of the electrode assembly using this, and is also referred to as the "winding direction" because it is the same as the winding direction in the electrode assembly manufacturing process. Also, the "thickness direction" (transverse direction TD) means a direction perpendicular to the longitudinal direction.

Throughout the present specification, unless otherwise defined, the "thickness" of each component may indicate a value measured using a known thickness measuring device capable of measuring the thickness of the separator of the battery. For example, as for the thickness measuring device, a VL-50S product of Mitutoyo corporation may be used, but the present disclosure is not limited to this.

"About," "approximately," and "substantially" used in the present specification are used to mean ranges of numerical values or degrees or approximations thereof, taking into account inherent manufacturing and material tolerances.

The electrode assembly embedded in a battery casing is a chargeable/dischargeable power generation device composed of a stacked structure of a positive electrode, a separator, and a negative electrode, and is classified into a jelly-roll type electrode assembly, a stack type electrode assembly, and a stack/folding type electrode assembly. The jelly-roll type electrode assembly has a wound form in which a separator is interposed between long sheet-type positive and negative electrodes coated with active materials. The stack type electrode assembly has a form in which a number of positive and negative electrodes having a predetermined size are sequentially stacked in a state where separators are interposed. The stack/folding type electrode assembly has a composite structure of a jelly-roll type and a stack type. Among these, the jelly-roll type electrode assembly has an advantage such as ease of manufacturing and high energy density per weight.

In the case of a cylindrical battery, a long electrode with a fixed width is rolled into a roll shape to manufacture a jelly-roll-shaped electrode assembly. In the cylindrical battery manufactured by inserting this jelly-roll type electrode assembly into a battery casing, the shrinkage and expansion of the electrode are repeated during charging/discharging. Meanwhile, the manufacturing step of the electrode is accompanied by a cutting process, and a burr, which is a rough portion, may exist on the surface of the terminal portion of the electrode due to the cutting process. When the rough portion, the burr, exists, impingement may occur as the separator of the battery is pressed due to shrinkage and expansion of the electrode during charging/discharging of the cylindrical battery. As a result, there is a problem in that an internal short circuit may occur. For example, when a burr exists on the terminal portion of the electrode, the burr of the electrode may rub against the inorganic particles and the binder polymer in the porous coating layer of the separator due to shrinkage and expansion of the electrode during charging/discharging of the cylindrical battery. Then, impingement of the separator, such as detachment of inorganic particles and binder polymers, may occur.

Also, in the case of the cylindrical battery, unlike in prismatic and pouch-type batteries using stack-type electrode assemblies, a jelly-roll type electrode assembly is used as the electrode assembly, and metal such as an aluminum can is used as the battery housing. Thus, since during charging/discharging of the battery, the shrinkage and expansion direction of the electrode is concentrated only in the centripetal direction of the jelly-roll type electrode assembly, the impingement problem of the separator may be more severe at the center of the winding axis of the cylindrical battery cell.

Meanwhile, the present disclosure provides a separator, an electrode assembly including the same, and a battery cell including the same. The separator has a porous polymer substrate and porous coating layers formed on both surfaces of the porous polymer substrate and containing inorganic particles and a binder polymer. Here, as the loading amount of the porous coating layer, for example, the thickness of the porous coating layer, increases, on the same area of the porous polymer, the content of the inorganic particles and binder polymer increases. Then, the resistance of the separator to the burr of the electrode increases during the shrinkage and expansion of the battery, thereby improving the impingement of the separator.

### <Separator>

One embodiment of the present disclosure provides the following separator.

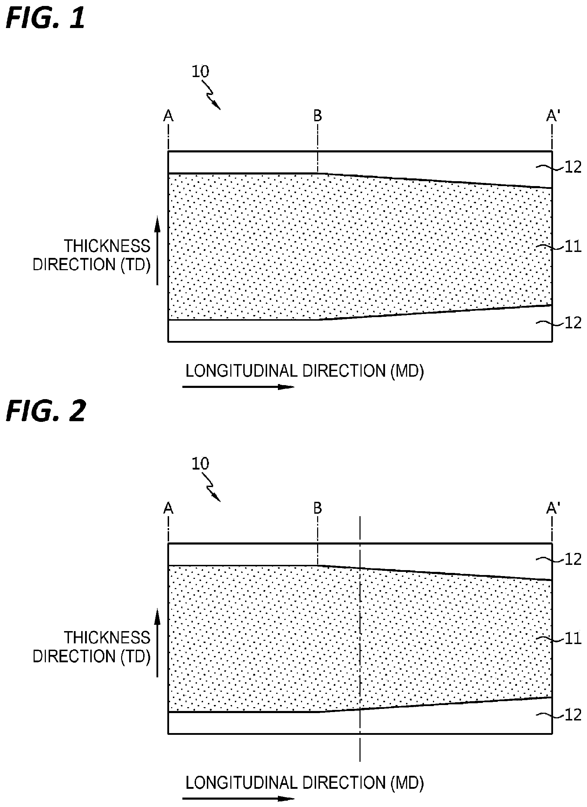

According to one embodiment of the present disclosure, as illustrated in FIG. 1, a separator 10 is a separator that includes a porous polymer substrate 11; and porous coating layers 12 formed on both surfaces of the porous polymer substrate and containing inorganic particles and a binder polymer. The separator 10 has one end A and the other end A' in the longitudinal direction, and a point B is present between one end A and the other end A'. The thickness of the separator is constantly maintained from one end A to the other end A'. In a region AB from one end A to the point B, the thicknesses of the porous polymer substrate and the porous coating layers are constantly maintained. In a region BA' from the point B to the other end A', the thickness of the porous polymer substrate is decreased, and the thicknesses of the porous coating layers are increased. For example, according to the separator of the present embodiment, in the region BA' from the point B to the other end A' of the separator, the thickness of the porous polymer substrate may be decreased toward the other end A', and the thickness of the porous coating layer may be increased toward the other end A'.

In one embodiment of the present disclosure, as illustrated in FIG. 1, the region AB means a part of the separator corresponding to a section from one end A to the point B present in the longitudinal direction of the separator. Also, in one embodiment of the present disclosure, 'the porous polymer substrate in the region AB' means a porous polymer substrate corresponding to a section from one end A to the point B present in the longitudinal direction of the separator.

As described above, when the thickness of the porous polymer substrate is decreased and the thickness of the porous coating layer is increased in the region BA' from the point B to the other end A', the content of the binder polymer and inorganic particles is high in the direction toward the other end A' of the separator. Thus, the binding force, etc. between inorganic particles may be excellent and then the mechanical strength of the separator may be excellent.

In one embodiment of the present disclosure, the separator may have asymmetrical interfacial shapes between the porous polymer substrate and the porous coating layers with respect to the vertical line at the center in the longitudinal direction (MD). As illustrated in FIG. 2, the vertical line at the center in the longitudinal direction (MD) may be an imaginary line drawn perpendicular to the longitudinal direction of the separator, at the center in the longitudinal direction of the separator.

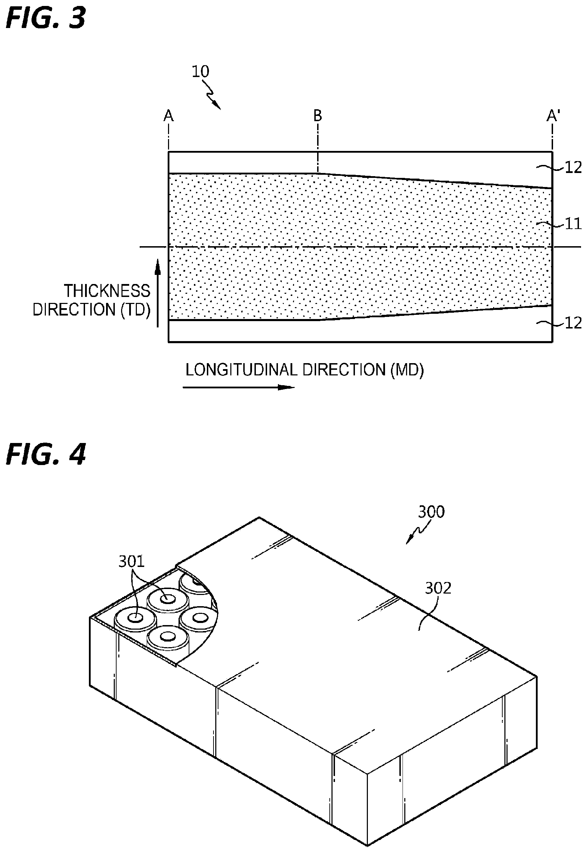

Meanwhile, in one embodiment of the present disclosure, with respect to the vertical line at the center in the thickness direction (TD) of the separator, the interfaces between the porous polymer substrate and the porous coating layers may have substantially symmetrical shapes. As illustrated in FIG. 3, the vertical line in the thickness direction (TD) may be an imaginary line drawn perpendicular to the thickness direction of the separator, at the center in the thickness direction of the separator.

In the separator according to one embodiment of the present disclosure, in the region BA' from the point B to the other end A', the thickness of the porous polymer substrate may be decreased toward, for example, the other end A', and the thickness of the porous coating layer may be increased toward, for example, the other end A'. The decrease in the thickness of the porous polymer substrate may be a linear decrease or a non-linear decrease, and the increase in the thickness of the porous coating layer may be a linear increase or a non-linear increase.

According to one embodiment, in the region BA' from the point B to the other end A', the thickness of the porous polymer substrate may be linearly decreased, and the thickness of the porous coating layer may be linearly increased. In such a case, the manufacturing process may be easy, compared to a case where the thickness of the porous polymer substrate non-linearly decreases during the forming process of the separator.

In this specification, the term "the thickness of the separator is constantly maintained" indicates that when a thickness at any location within a specific region is measured according to the same method, the measured thickness value exists within an error range of about 5% or less. For example, when the deviation of the thickness values at any two locations within a specific region is within about 5%, 4%, 3%, 2%, 1%, or 0% *(i.e.,* there is no difference), the thickness can be expressed to be constantly maintained.

In this specification, the term "the thickness is increased" indicates that when the thickness is measured with a certain directionality within a specific region according to the same method, the thickness value continuously increases or discontinuously increases. The rate at which the thickness value is increased may be constantly maintained within an error range within about 5% or may be discontinuously changed, but the continuous increase of the thickness may indicate that the thickness value is continuously increased at a constant rate.

In this specification, the term "the thickness is decreased" indicates that when the thickness is measured with a certain directionality within a specific region according to the same method, the thickness value continuously decreases or discontinuously decreases. The rate at which the thickness value is decreased may be constantly maintained within an error range within about 5% or may be discontinuously changed, but the continuous decrease of the thickness may indicate that the thickness value is continuously decreased at a constant rate.

In one embodiment of the present disclosure, the thickness of the porous polymer substrate may be measured by a measurement method performed after the removal of the porous coating layer from the separator. For example, after the porous coating layer is removed by using a solvent capable of dissolving the porous coating layer included in the separator, the thickness of the remaining porous polymer substrate may be measured.

In one embodiment of the present disclosure, after the thickness of the separator is measured, the thickness of the porous coating layer may be measured by a difference value between this thickness of the separator and the thickness of the porous polymer substrate, which is measured as described above, but the measurement method is not limited to this.

In one embodiment of the present disclosure, the length from one end A to the point B may be about 10% to 70%, about 20% to 60%, about 30% to 50%, or about 40% to 45% relative to the length of 100% in the longitudinal direction of the separator. When the length from one end A to the point B satisfies the above-mentioned range, the heat resistance and the mechanical strength of the separator may be excellent, and the resistance of the separator may be low. Here, the length of the separator may mean the length from one end A to the other end A'.

In one embodiment of the present disclosure, the thickness of the porous polymer substrate at the other end A' may be about 75% to 95%, or about 80% to 90% relative to the thickness of the porous polymer substrate of 100% at one end A. For example, when the thickness of the porous polymer substrate at one end A is about 10 µm, the thickness at the other end A' may fall within a range of about 7.5 µm to 9.5 µm.

In one embodiment of the present disclosure, the porous coating layer may be formed on the porous polymer substrate in an amount (loading amount) of about 4.0 g/m² to 6.5 g/m², about 4.5 g/m² to 6.3 g/m², or about 5.0 g/m² to 6.0 g/m².

In one embodiment of the present disclosure, the content of the porous coating layer in the region BA' may be about 40 parts by weight to 1300 parts by weight, about 100 parts by weight to 1,200 parts by weight, or about 200 parts by weight to 1,000 parts by weight relative to the porous coating layer of 100 parts by weight in the region AB. When the content of the porous coating layer in the region BA' satisfies the above-mentioned range, the mechanical properties of the separator in the region BA' may be excellent, and the extent of the separator impingement occurring due to shrinkage/expansion of the electrode may be decreased at the center of a cylindrical battery cell including the separator according to one embodiment of the present disclosure.

In one embodiment of the present disclosure, the content of the porous coating layer may be about 40 parts by weight to 60 parts by weight, or about 45 parts by weight to 55 parts by weight relative to the porous polymer substrate of 100 parts by weight. The content of the porous coating layer may mean a relative content relative to parts by weight of the porous polymer substrate in the region AA', *i.e.,* the entire range of the separator.

In one embodiment of the present disclosure, the total length of the separator in the longitudinal direction may be about 1.5 m to 5 m, or about 2 m to 4.5 m.

According to one embodiment of the present disclosure, the porous polymer substrate may have a structure having pores, and may be, for example, a porous polymer film substrate or a porous polymer nonwoven substrate.

The porous polymer film substrate may be a porous polymer film made of an olefin polymer such as polyethylene or polypropylene, and such an olefin-polymer porous polymer film substrate exhibits a shutdown function at a temperature of, for example, about 80 °C to 130 °C.

Here, the porous polymer film may be formed of olefin polymer-based polymers such as polyethylene (e.g., high-density polyethylene, linear low-density polyethylene, low-density polyethylene, and ultra-high molecular weight polyethylene), polypropylene, polybutylene, and polypentene, either singly or as a mixture of two or more of these polymers, or derivatives thereof.

As representative examples of a commercially available olefin-polymer porous polymer film that can be applied as such a porous polymer substrate, wet polyethylene series (Asahi-Kasei E-Materials, Toray, SK IE Technology, Shanghai Energy, Sinoma, Entek), dry polypropylene series (Shenzhen Senior, Cangzhou Mingzhu), dry polypropylene/polyethylene multilayer structure series (Polypore, Ube) etc. may be used, but the present disclosure is not limited to these.

Also, in manufacturing the porous polymer film substrate, various polymers such as polyester in addition to the olefin polymer may be used to perform molding of a film shape. Also, the porous polymer film substrate may be formed with a structure where two or more film layers are stacked. Each film layer may also be formed of the above-mentioned polymer, such as olefin polymer or polyester, alone, or a polymer in which two or more types thereof are mixed.

Also, the porous polymer film substrate and the porous nonwoven substrate may be formed of polyethylene terephthalate, polybutylene terephthalate, polyester, polyacetal, polyamide, polycarbonate, polyimide, polyether ether ketone, polyethersulfone, polyphenylene oxide, polyphenylene sulfide, polyethylene naphthalene, etc. either singly or as a mixture of these polymers, in addition to the above olefin polymers.

In one embodiment of the present disclosure, the weight average molecular weight of the porous polymer substrate may be about 10,000 g/mol to 1,000,000 g/mol or about 100,000 g/mol to 800,000 g/mol. When the weight average molecular weight of the porous polymer substrate satisfies the above-mentioned range, the strength of the porous polymer substrate may be excellent.

Here, the weight average molecular weight may be measured by gel permeation chromatography (GPC, PL GPC220, Agilent Technologies) under the following conditions.
- Column: PL Olexis (Polymer Laboratories)
- Solvent: TCB (Trichlorobenzene)
- Flow rate: 1.0 ml/min
- Sample concentration: 1.0 mg/ml
- Injection volume: 200 µl
- Column temperature: 160 °C
- Detector: Agilent High Temperature RI detector
- Standard: Polystyrene (corrected by a cubic function)

The thickness of the porous polymer substrate is not particularly limited as long as it satisfies the above-mentioned ratio range relative to the total thickness of the separator, but may be, for example, about 1 µm or more, 10 µm or more, about 30 µm or less, or about 50 µm or less. When the thickness satisfies the above-mentioned range, it is possible to electrically insulate the positive electrode from the negative electrode while maintaining mechanical properties.

The pore size and porosity of the porous polymer substrate are not particularly limited, but, for example, the porosity may range from about 10% to 70%, and the pore size (diameter) may range from about 0.01 µm to 5 µm. When the pore size and the porosity satisfy these ranges, the problem of acting as a resistance layer is prevented, and mechanical properties may be maintained. Also, the porous polymer substrate may be in the form of fiber or membrane.

The porosity or the pore size may be measured by using BELSORP (BET equipment) of BEL JAPAN using an adsorption gas such as nitrogen or may be measured by a method such as a mercury intrusion porosimetry or a capillary flow porosimetry.

The porous coating layers are located on both surfaces of the porous polymer substrate, and contain a binder polymer and inorganic particles.

The inorganic particles play a role in forming micropores by allowing empty spaces to be formed between inorganic particles, and also serve as a kind of spacer that can maintain a physical shape. Then, the inorganic particles generally have a characteristic in which the physical properties are not changed even at high temperatures of 200 °C or more. Thus, the formed organic/inorganic composite porous film has excellent heat resistance.

Therefore, in a lithium secondary battery including the separator, even when the porous polymer substrate is ruptured inside the battery due to excessive conditions caused by internal or external factors such as high temperature, overcharge, and external impact, it is difficult for both electrodes to be completely short-circuited due to the porous coating layer. Even when a short circuit occurs, the short-circuited region may be suppressed from significantly expanding, thereby improving the safety of the battery.

These inorganic particles are not particularly limited as long as they are electrochemically stable. For example, the inorganic particles that can be used in one embodiment of the present disclosure are not particularly limited as long as they do not undergo oxidation and/or reduction reactions in the operating voltage range in the application to the battery (e.g., 0 to 5 V based on Li/Li⁺). Also, when inorganic particles having ion transfer capability are used, it is possible to increase the ion conductivity in the electrochemical device and to achieve the improvement of performance by using inorganic particles having the highest possible ion conductivity. Also, when the inorganic particles have a high density, it is possible to prevent the difficulty in dispersing during coating and also to solve the problem of increase in weight during manufacturing of the battery by using inorganic particles having the smallest possible density. Also, the inorganic material with a high permittivity may contribute to increasing the degree of dissociation of electrolyte salts in the liquid electrolyte, for example, lithium salts, thereby improving the ion conductivity of the electrolyte.

For the above-mentioned reasons, the inorganic particles may be high-permittivity inorganic particles having a dielectric constant of 5 or more or 10 or more, inorganic particles having piezoelectricity, inorganic particles having a lithium ion transfer capability, or a mixture thereof.

Examples of the inorganic particles having a dielectric constant of 5 or more may include SrTiO₃, SnO₂, CeO₂, MgO, NiO, CaO, ZnO, ZrO₂, Y₂O₃, Al₂O₃, TiO₂, SiC, AlO(OH), Mg(OH)₂, Al(OH)₃, AlN, and a mixture thereof, but are not limited thereto.

The inorganic particles having piezoelectricity refer to a material that is a non-conductor at normal pressure but has properties of electrical conductivity due to a change of the internal structure when a certain pressure is applied, and then exhibit a high permittivity characteristic such as a dielectric constant of 100 or more. Also, when this material is stretched or compressed due to application of a certain pressure, electric charges are generated, and then one side becomes positively charged and the other side becomes negatively charged. Thus, the material has a function of a potential difference generated between both sides.

In a case where the inorganic particles having the above characteristics are used, when an internal short circuit occurs in both electrodes due to an external impact such as local crush or nail, the positive electrode and the negative electrode do not come into direct contact with each other due to inorganic particles coated on the separator. Moreover, a potential difference occurs in the particles due to the piezoelectricity of the inorganic particles. This allows electrons to move between two electrodes, i.e., a minute current flow. Thus, the battery voltage may be smoothly decreased, thereby improving the safety.

Examples of the inorganic particles having piezoelectricity may include BaTiO₃, Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT) hafnia (HfO₂) and a mixture thereof, but are not limited thereto.

The inorganic particles having the lithium ion transfer capability refer to inorganic particles that contain a lithium element but have a function of moving lithium ions without storing lithium. The inorganic particles having the lithium ion transfer capability can transfer and move lithium ions due to a kind of defect present within a particle structure. Thus, the lithium ion conductivity within the battery is improved, thereby improving the battery performance.

Examples of the inorganic particles having the lithium ion transfer capability may include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0<y<3, 0<z<7) such as LiI-Li₂S-P₂S₅, and a mixture thereof, but are not limited thereto.

When the above-mentioned high-permittivity inorganic particles, the inorganic particles having the piezoelectricity, and the inorganic particles having the lithium ion transfer capability are mixed, their synergistic effect may be doubled.

For the separator according to the present disclosure, it is possible to form a pore structure of the porous coating layer together with pores included in the separator substrate by controlling the size of the inorganic particles constituting the porous coating layer, the content of the inorganic particles, and the composition of the inorganic particles and the binder polymer. Also, it is possible to control the pore size and the porosity together.

The average particle diameter (D₅₀) of the inorganic particles may be, for example, about 1 µm or less, about 500 nm or less, or about 300 nm or less in order to form a porous coating layer with a uniform thickness and to obtain an appropriate porosity thereof. When the average particle diameter (D₅₀) of the inorganic particles satisfies this range, the dispersibility of a slurry for the porous coating layer is maintained, making it easy to control the properties of the separator. Then, it is possible to prevent or suppress problems, that is, a decrease in the mechanical properties, which is caused by an excessive increase in the thickness of the separator, or an internal short circuit occurring during charging/discharging of the battery due to an excessively large pore size.

The porosity of the porous coating layer may range from about 5% to 95%, but is not limited thereto.

The content of the inorganic particles is not particularly limited, but may be, for example, about 50 wt% or more, about 60 wt% or more, about 95 wt% or less, about 97 wt% or less, or about 99 wt% or less, per 100 wt% on the basis of the total weight of the porous coating layer. The weight ratio of the inorganic particles to the binder polymer may be, for example, about 50:50 or more, about 60:40 or more, about 70:30 or more, about 95:5 or less, about 97:3 or less, or about 99:1 or less, and may be about 50:50 to 99:1, about 60:40 to 97:3, or about 70:30 to 95:5. When the content of the inorganic particles satisfies this range, it is possible to prevent or suppress a problem in that the pore size and porosity of the formed porous coating layer are decreased due to an excessive increase in the content of the binder polymer. Also, since the content of the binder polymer is low, it is also possible to solve a problem in that the peeling resistance of the porous coating layer is weakened due to a decrease in an adhesive force between inorganic materials.

As for the binder polymer, a polymer having the lowest possible glass transition temperature (T_{g}) may be used, for example, in the range of -200 °C to 200 °C.

As an example, the binder polymer may include polyvinylidene fluoride, polyvinylidene fluoride-hexafluoropropylene, polyvinylidene fluoride-trichloroethylene, polyvinylidene fluoride-chlorotrifluoroethylene, polymethyl methacrylate, polyacrylonitrile, polyvinylpyrrolidone, polyvinyl acetate, ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxymethylcellulose, styrene butadiene copolymer, polyimide, or two or more of these, but the present disclosure is not limited thereto.

In the porous coating layer, the inorganic particles are charged and are in contact with each other, and then are bound to each other by the binder polymer. Thus, an interstitial volume is formed between the inorganic particles, and the interstitial volume between the inorganic particles becomes an empty space so that a pore is formed.

In the present embodiment, the binder polymer allows the inorganic particles to adhere to each other such that a state where they are bound to each other can be maintained. For example, the binder polymer connects and fixes the inorganic particles to each other. Also, the pores of the porous coating layer are pores formed when the interstitial volumes between the inorganic particles become empty spaces. These are spaces confined by inorganic particles which are substantially in contact with each other in a structure filled with the inorganic particles (closed packed or densely packed).

In addition to the above-mentioned inorganic particles and binder polymer, as for the components for the porous coating layer, other additives such as a conductive agent may be further included.

In one embodiment of the present disclosure, the thickness of the porous coating layer is not particularly limited, as long as it satisfies the above-mentioned ratio range relative to the total thickness of the separator. For example, the thickness may be about 0.5 µm to 10 µm, about 0.5 µm to 5 µm, or about 1.5 µm to 3 µm.

### <Manufacturing Method of Separator>

The separator manufacturing method according to one embodiment of the present disclosure may include a step of producing a porous polymer substrate (S100), and a step of forming a porous coating layer (S200).

In one embodiment of the present disclosure, the porous polymer substrate may be produced by a conventional dry manufacturing method or a wet manufacturing method.

In one embodiment of the present disclosure, in the dry manufacturing method, a mixture containing a polymer resin is kneaded, and then is melt-extruded to prepare a unstretched sheet. After that, the unstretched sheet is stretched to obtain a stretched sheet and then the porous polymer substrate may be produced.

In one embodiment of the present disclosure, the wet manufacturing method may include steps of kneading a mixture containing a polymer resin and a plasticizer, and extruding the mixture to obtain an extrudate. After that, the extrudate is cooled on a casting roll to obtain a sheet. The obtained sheet is stretched in the mechanical direction (MD) and the thickness direction (TD), and the plasticizer is extracted from the stretched sheet with an organic solvent.

In one embodiment of the present disclosure, the polymer resin may include polyethylene (e.g., high-density polyethylene, linear low-density polyethylene, low-density polyethylene, and ultra-high molecular weight polyethylene), polypropylene, polybutylene, polypentene, polyester, polyethylene terephthalate, polybutylene terephthalate, polyester, polyacetal, polyamide, polycarbonate, polyimide, polyether ether ketone, polyethersulfone, polyphenylene oxide, polyphenylene sulfide, polyethylene naphthalene or a mixture of two or more of these.

In one embodiment of the present disclosure, in manufacturing the porous polymer substrate, a portion from one end (between both ends of the porous polymer substrate) to one point (any point between both ends) (hereinafter, also referred to as a first portion) may have a fixed first thickness, whereas a portion from one point to the other end (hereinafter, also referred to as a second portion) may have a thickness that decreases toward the other end such that the thickness at the other end becomes a second thickness thinner than the first thickness.

In one embodiment of the present disclosure, the thickness of the porous polymer substrate may be controlled in the extrusion step or in the stretching step. For example, in the extrusion step, a single-screw extruder or a twin-screw extruder may be used, and a T-die is provided as a discharging port. By controlling the T-die as the discharging port, it is possible to control the thickness of the porous polymer. Also, the stretching step may be performed by a roll method, a tenter method, or sequential or simultaneous stretching, and in the stretching step, the thickness of the porous polymer may be controlled.

Next, in the step S200 of forming the porous coating layer, a porous coating layer forming slurry may be applied and dried on at least one surface of the porous polymer substrate produced in the step S100 of producing the porous polymer substrate.

In one embodiment of the present disclosure, the porous coating layer forming slurry may be produced by mixing inorganic particles and a binder polymer in a dispersion medium. Here, the inorganic particles and the binder polymer are replaced with those mentioned above.

In one embodiment of the present disclosure, as for the dispersion medium, those having a solubility index similar to that of the binder polymer to be used and having a low boiling point may be used. This is to facilitate uniform mixing and subsequent removal of the dispersion medium. Non-limiting examples of the usable dispersion medium may include acetone, tetrahydrofuran, methylene chloride, chloroform, dimethylformamide, N-methyl-2-pyrrolidone (NMP), cyclohexane, water, and a mixture thereof.

In one embodiment of the present disclosure, after the inorganic particles are added to a dispersion liquid obtained by dispersing the binder polymer in the dispersion medium, a step of crushing the inorganic particles may be further included. Here, the crushing time may be within, for example, about 1 h to 20 h, and the particle size of the crushed inorganic particles may be about 0.001 µm to 10 µm as mentioned above. As for the crushing method, a conventional method may be used, and, for example, a ball mill method may be used.

In one embodiment of the present disclosure, in the step of applying the porous coating layer forming slurry, a conventional coating method known in the art as a method of coating on the porous polymer substrate may be used, and various methods such as, for example, dip coating, die coating, roll coating, comma coating, and a mixed method thereof may be used.

In one embodiment of the present disclosure, in the step of drying the porous coating layer forming slurry, the drying may be performed under a humidity condition of 10% to 80% by methods such as natural drying or hot air drying.

In one embodiment of the present disclosure, when the porous coating layer forming slurry is applied to form the porous coating layer, according to one embodiment, each of the thicknesses of the porous coating layers coated on both surfaces of the first portion of the porous polymer substrate having the first thickness is a fixed third thickness. Then, since the thickness of the second portion of the porous polymer substrate decreases toward the other end and the thickness at the other end becomes the second thickness, each of the thicknesses of the porous coating layers coated on both surfaces of the second portion increases toward the other end, and then the thickness at the other end becomes a second thickness thicker than that in the first portion. Through this manufacturing process, the manufactured separator may have a fixed thickness throughout.

### <Electrode Assembly and Battery Cell>

The embodiment of the present disclosure provides an electrode assembly.

According to one aspect of the present disclosure, provided is an electrode assembly including a separator; a first electrode; and a second electrode, in which the first electrode, the separator and the second electrode are wound in a direction of the other end A' of the separator as a winding axis.

As mentioned above, the separator has one end A and the other end A' in the longitudinal direction, and a point B is present between one end A and the other end A'. The thickness of the separator is constantly maintained from one end A to the other end A'. In a region AB from one end A to the point B, the thicknesses of the porous polymer substrate and the porous coating layers are constantly maintained. In a region BA' from the point B to the other end A', the thickness of the porous polymer substrate is decreased, and the thicknesses of the porous coating layers are increased.

The first electrode may be a positive electrode and the second electrode may be a negative electrode, or the first electrode may be a negative electrode and the second electrode may be a positive electrode.

In one embodiment of the present disclosure, the first electrode and the second electrode may have a rectangular sheet shape. Also, the first electrode and the second electrode may have a sheet shape having an aspect ratio greater than 1. Thus, in the present specification, the first electrode may also be referred to as a first electrode plate, and the second electrode may also be referred to as a second electrode plate. Also, the positive electrode may also be referred to as a positive electrode plate, and the negative electrode may also be referred to as a negative electrode plate.

In one embodiment of the present disclosure, the electrode assembly may be a jelly-roll type electrode assembly. For example, the electrode assembly may be a jelly-roll type electrode assembly having a structure in which a positive electrode plate as a first electrode, a negative electrode plate as a second electrode, and a separator interposed between the positive electrode plate and the negative electrode plate are wound in one direction. The electrode assembly is characterized in that the separator is the above-mentioned separator of one embodiment of the present disclosure.

In one embodiment of the present disclosure, in the electrode assembly, the first electrode, the separator and the second electrode may be stacked in this order, or the separator (i.e., a first separator), the first electrode, the separator (i.e., a second separator) and the second electrode may be stacked in this order.

In one embodiment of the present disclosure, the winding length of the electrode assembly may be about 1.5 m to 5 m, or about 2 m to 4.5 m.

In one embodiment of the present disclosure, as for a positive electrode active material coated on the positive electrode plate and a negative electrode active material coated on the negative electrode plate, active materials known in the art may be used without limitation.

The positive electrode active material includes a lithium intercalation material as a main component, e.g., layered compounds such as lithium cobalt oxide (LiCoO₂) and lithium nickel oxide (LiNiO₂) or compounds substituted with at least one type of transition metal; lithium manganese oxide (LiMnO₂) such as chemical formulas Li₁₊ₓMn₂. ₓO₄ (where x is 0 to 0.33), LiMnO₃, LiMn₂O₃, and LiMnO₂; lithium copper oxide (Li₂CuO₂); vanadium oxide such as LiV₃O₈, LiFe₃O₄, V₂O₅, and Cu₂V₂O₇; nickel site-type lithium nickel oxide (lithiated nickel oxide) represented by the chemical formula LiNi₁₋ₓMₓO₂ (where M = Co, Mn, Al, Cu, Fe, Mg, B or Ga, and x = 0.01 to 0.3); lithium manganese composite oxide represented by a chemical formula LiMn₂₋ₓMₓO₂ (where M = Co, Ni, Fe, Cr, Zn or Ta, and x = 0.01 to 0.1) or Li₂Mn₃MO₈ (where M = Fe, Co, Ni, Cu or Zn); LiMn₂O₄ in which a part of lithium in the chemical formula is substituted with an alkaline earth metal ion; a disulfide compound; Fe₂(MoO₄)₃ or a composite oxide formed by a combination of these. Although the above types are present, the present disclosure is not limited thereto.

In the present disclosure, the positive electrode active material has a form of a single particle composed of one primary particle or a pseudo-single particle that is an aggregate of 10 or less primary particles.

In the past, as for the positive electrode active material, spherical secondary particles in which tens to hundreds of primary particles are aggregated have been generally used. However, in the case of the secondary particle-type positive electrode active material in which many primary particles are aggregated in this manner, there is a problem in that the primary particles are likely to break (particle breakage) in the rolling process during the manufacturing of the positive electrode, and cracks occur inside particles in the charging/discharging process. When the particles of the positive electrode active material are broken or cracks occur inside the particles, the contact area with the electrolyte increases. Thus, there is a problem in that gas generation is increased due to side reactions with the electrolyte. When the gas generation is increased inside the cell of the cylindrical battery cell, there is a risk of occurrence of battery explosion due to an increase of pressure inside the battery. For example, when the volume of the cylindrical battery cell is increased, the amount of active material inside the battery increases according to the increase of volume. This also significantly increases the gas generation amount, thereby further increasing the risk of ignition and/or explosion of the battery.

Meanwhile, compared to the conventional secondary particle-type positive electrode active material in which tens to hundreds of primary particles are aggregated, the positive electrode active material having a form of a single particle composed of one primary particle or a pseudo-single particle that is an aggregate of 10 or less primary particles has a high particle strength. Thus, particle breakage hardly occurs during rolling. Also, in the case of the single particle or pseudo-single particle-type positive electrode active material, since the number of primary particles constituting the particles is small, a change caused by volume expansion and contraction of the primary particles is small during charging/discharging. Accordingly, the occurrence of cracks inside the particles is significantly decreased.

Therefore, as in the embodiment of the present disclosure, when the positive electrode active material composed of single particles or pseudo-single particles is used, it is possible to significantly decrease the amount of gas generated by particle breakage and internal crack occurrence. Thus, excellent safety can be achieved even in a large cylindrical battery cell. In the embodiment of the present disclosure, as for the positive electrode active material, only the single particle or pseudo-single particle-type positive electrode active material is used, and the secondary particle-type positive electrode active material is not used. This is because when the secondary particle-type positive electrode active material is included, the effect of suppressing gas generation is low, and then it is not possible to obtain sufficient safety in the application to a large cylindrical battery cell.

Meanwhile, the average particle diameter D₅₀ of the single particle or pseudo-single particle-type positive electrode active material according to the embodiment of the present disclosure may be about 5 µm or less, about 1 µm to 5 µm, or about 2 µm to 5 µm. When the average particle diameter D₅₀ of the positive electrode active material satisfies the above range, the resistance increase may be minimized.

In the single particle or pseudo-single particle-type positive electrode active material, there are a small number of interfaces between primary particles, which become movement paths of lithium ions within the particles. Thus, the lithium mobility is lower than that in the secondary particle-type positive electrode active material. This causes a problem in that the resistance is increased. This increase in resistance becomes more severe as the particle size increases. Then, an increase in resistance adversely affects the capacity and output characteristics. Therefore, in the embodiment of the present disclosure, the single particle or pseudo-single particle positive electrode active material with a small average particle diameter D₅₀ of 5 µm or less is employed so that the moving distance of lithium ions within particles may be minimized and then the resistance increase may be suppressed.

The primary particle diameter of the positive electrode active material may be about 0.5 µm to 5 µm, about 1 µm to 5 µm, or 2 µm to 5 µm. When the average particle diameter of the primary particles satisfies the above range, it is possible to form the single particle or pseudo-single particle-type positive electrode active material excellent in electrochemical characteristics. When the average particle diameter of primary particles is too small, the number of agglomerates of primary particles forming the positive electrode active material increases, which reduces the effect of suppressing the particle breakage occurrence during rolling. When the average diameter of primary particles is too large, the lithium diffusion path inside the primary particles may become longer, which may increase the resistance and deteriorate the output characteristics.

In one embodiment of the present disclosure, for example, the positive electrode active material may have a unimodal particle size distribution. In the past, in order to improve the electrode density of the positive electrode active material layer, a bimodal positive electrode active material has been widely used in which a large-particle diameter positive electrode active material having a large average particle diameter and a small-particle diameter positive electrode active material having a small average particle diameter are mixed for use. However, as described above, in the case of the single particle or pseudo-single particle-type positive electrode active material, when the particle diameter increases, the lithium movement path becomes longer, thereby significantly increasing the resistance. Thus, a positive electrode active material having a unimodal distribution may be used in order to prevent a problem in that the capacity and output characteristics are decreased when large-particle diameter particles are mixed for use.

Meanwhile, the positive electrode active material may contain lithium nickel-based oxide, and may contain, for example, lithium nickel-based oxide represented by the following chemical formula 1.

[Chemical Formula 1] LiₐNi_{b}Co_{c}M¹_{d}M²ₑO₂

In the chemical formula 1, M¹ may be Mn, Al, or a combination thereof, and may be Mn or Mn and Al in one embodiment.

M² may be at least one type selected from the group including Zr, W, Y, Ba, Ca, Ti, Mg, Ta, and Nb, may be at least one type selected from the group including Zr, Y, Mg, and Ti, or may be Zr, Y, or a combination thereof. The element M² is not necessarily included, but M² included in an appropriate amount may play a role in promoting the grain growth during sintering, or in improving the crystal structure stability.
a represents the molar ratio of lithium in the lithium nickel-based oxide, and may satisfy, for example, 0.8≤a≤1.2, 0.85≤a≤1.15, or 0.9≤a≤1.2. When the molar ratio of lithium satisfies the above range, the crystal structure of the lithium nickel-based oxide may be stably formed.
b represents the molar ratio of nickel among all metals excluding lithium in the lithium nickel-based oxide, and may satisfy, for example, 0.8≤b<1, 0.82≤b<1, or 0.83≤b<1. When the molar ratio of nickel satisfies the above range, a high energy density may be exhibited and then a high capacity can be realized.
c represents the molar ratio of cobalt among all metals excluding lithium in the lithium nickel-based oxide, and may satisfy, for example, 0<c<0.2, 0<c<0.18, or 0.01≤c≤0.17. When the molar ratio of cobalt satisfies the above range, it is possible to realize good resistance characteristics and output characteristics.
d represents the molar ratio of the M¹ element among all metals excluding lithium in the lithium nickel-based oxide, and may satisfy, for example, 0<d<0.2, 0<d<0.18, or 0.01≤d≤0.17. When the molar ratio of the M¹ element satisfies the above range, the excellence of the positive electrode active material in the structure stability is exhibited.
e represents the molar ratio of the M² element among all metals excluding lithium in the lithium nickel-based oxide, and may satisfy, for example, 0≤e≤0.1, or 0≤e≤0.05.

Meanwhile, as necessary, in the positive electrode active material according to the present disclosure, the surface of the lithium nickel-based oxide particle may further contain a coating layer containing at least one type of coating element selected from Al, Ti, W, B, F, P, Mg, Ni, Co, Fe, Cr, V, Cu, Ca, Zn, Zr, Nb, Mo, Sr, Sb, Bi, Si, and S. For example, the coating element may be Al, B, Co, or a combination thereof.

When the coating layer is present on the surface of the lithium nickel-based oxide particle, the contact between the electrolyte and the lithium composite transition metal oxide is suppressed by the coating layer. As a result, it is possible to obtain an effect of decreasing the transition metal dissolution or gas generation caused by side reactions with the electrolyte.

The positive electrode active material may be included in an amount of about 80 parts by weight to 99 parts by weight, about 85 parts by weight to 99 parts by weight, or about 90 parts by weight to 99 parts by weight relative to 100 parts by weight of the entire positive electrode active material layer.

The positive electrode current collector has a thickness of, for example, about 3 µm to 500 µm. This positive electrode current collector is not particularly limited as long as it has conductivity without causing chemical changes in the battery. For example, stainless steel, aluminum, nickel, titanium, baked carbon, or aluminum or stainless steel whose surface is treated with carbon, nickel, titanium, silver, etc. may be used. By forming fine irregularities on the surface of the electrode current collector, it is also possible to increase the adhesive force of the positive electrode active material. Various forms are possible, including a film, a sheet, a foil, a net, a porous body, a foam, and a nonwoven fabric.

The positive electrode active material particles may be additionally mixed with a conductive material. This conductive material is added in an amount of about 1 part by weight to 50 parts by weight relative to 100 parts by weight of the entire positive electrode active material layer containing, for example, the positive electrode active material. The conductive material is not particularly limited as long as it has high conductivity without causing a chemical change in the battery. For example, it is possible to use graphite such as natural graphite or artificial graphite; carbon black such as carbon black, acetylene black, Ketjen black, channel black, furnace black, lamp black, or thermal black; conductive fiber such as carbon fiber or metal fiber; metal powder such as fluorinated carbon, aluminum, or nickel powder; conductive whisker such as zine oxide or potassium titanate; conductive oxides such as titanium oxide; conductive materials such as polyphenylene derivatives.

Also, the negative electrode is manufactured by applying and drying negative electrode active material particles on the negative electrode current collector, and as necessary, some components such as the above-described conductive material, the binder, and the solvent may be further included.

The negative electrode current collector has a thickness of, for example, about 3 µm to 500 µm. This negative electrode current collector is not particularly limited as long as it has conductivity without causing a chemical change in the corresponding battery. For example, copper, stainless steel, aluminum, nickel, titanium, baked carbon, copper or stainless steel whose surface is treated with carbon, nickel, titanium, silver, etc. and aluminum-cadmium alloy may be used. Also, like in the positive electrode current collector, fine irregularities may be formed on the surface to enhance the bonding strength of the negative electrode active material. The use in various forms such as a film, a sheet, a foil, a net, a porous body, a foam, and a nonwoven fabric is possible.

As for the negative electrode active material, it is possible to use, for example, carbon such as non-graphitizable carbon or graphite-based carbon; metal composite oxides such as LiₓFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y≤3; 1≤z≤8); lithium metal; lithium alloys; silicon-based alloys; tin-based alloys; oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni-based materials.

The binder polymer usable for the electrode is a component that assists in the binding of the electrode active material particles to the conductive material, etc. and the binding to the electrode current collector, and is added in an amount of, for example, 1 to 50 parts by weight relative to 100 parts by weight of the entire electrode active material layer including the electrode active material. As for such a binder polymer, it is possible to use, for example, any one binder polymer selected from polyvinylidene fluoride-co-hexafluoropropylene (PVdF), polyvinylidene fluoride-co-trichloroethylene, polymethylmethacrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, or a mixture of two or more types of these, but the present disclosure is not limited thereto.

Non-limiting examples of the solvent to be used for manufacturing the electrode may include acetone, tetrahydrofuran, methylene chloride, chloroform, dimethylformamide, N-methyl-2-pyrrolidone (NMP), cyclohexane, water, and a mixture thereof. These solvents provide an appropriate level of viscosity so that a slurry coating layer may be formed on the surface of the electrode current collector at a desired level.

The negative electrode includes a current collector; and a negative electrode active material layer that is located on at least one surface of the current collector and contains a negative electrode active material, a binder polymer, and a conductive material. The negative electrode active material layer includes a lower region in contact with the current collector and an upper region that is in contact with the lower region and extends to the surface of the negative electrode active material layer. Each of the lower region and the upper region independently may include at least two or more types of graphite and silicon-based compounds, as the negative electrode active material.

The lower region may include natural graphite as the negative electrode active material, and the upper region may include artificial graphite as the negative electrode active material.

Each of the lower region and the upper region may independently further include a silicon-based compound as the negative electrode active material.

The silicon-based compound may include at least one type of SiOx (0≤x≤2) and SiC.

According to one aspect of the present disclosure, the embodiment of the present disclosure provides a battery cell.

In one embodiment of the present disclosure, in the battery cell, the above-mentioned electrode assembly is mounted in a cylindrical battery housing together with an electrolyte.

For example, the battery cell may include an electrode assembly in which a first electrode, a separator and a second electrode are wound in a direction of the other end A' of the separator as a winding axis; a battery can in which the electrode assembly is accommodated; an electrolyte injected into the battery can; and a sealing body that seals an open end of the battery can. In regard to the first electrode; the second electrode; and the separator interposed between the first electrode and the second electrode, the separator has one end A and the other end A' in the longitudinal direction, and a point B is present between one end A and the other end A'. The thickness of the separator is constantly maintained from one end A to the other end A'. In a region AB from one end A to the point B, the thicknesses of the porous polymer substrate and the porous coating layers are constantly maintained. In a region BA' from the point B to the other end A', the thickness of the porous polymer substrate is decreased, and the thicknesses of the porous coating layers are increased.

Meanwhile, the form factor of the cylindrical battery housing may be 46110, 46800, 46950, 48110, 48750, or 48800.

The cylindrical battery cell according to one embodiment of the present disclosure may be a large cylindrical battery cell having a form factor ratio (defined as the value obtained by dividing the diameter of the cylindrical battery by its height, for example, the ratio of the diameter (T) to the height (H)) of about 0.4 or more. Here, the form factor means a value indicating the diameter and height of the cylindrical battery cell. For example, in the figures representing the form factor, the first two numbers represent the diameter of the cell, the next two numbers represent the height of the cell, and the last number O indicates that the cross-section of the cell is circular.

For example, the cylindrical battery cell according to one embodiment of the present disclosure may be a 46110 cell (diameter 46 mm, height 110 mm, form factor ratio 0.418), a 46800 cell (diameter 46 mm, height 80 mm, form factor ratio 0.575), a 48950 cell (diameter 48 mm, height 95 mm, form factor ratio 0.505), a 48110 cell (diameter 48 mm, height 110 mm, form factor ratio 0.418), a 48750 cell (diameter 48 mm, height 75 mm, form factor ratio 0.64), or a 48800 cell (diameter 48 mm, height 80 mm, form factor ratio 0.600).

The cylindrical battery cell according to one embodiment of the present disclosure employs the single particle or pseudo-single particle-type positive electrode active material. The gas generation amount is significantly decreased compared to in the past. Accordingly, even in the large cylindrical battery cell having a form factor ratio of 0.4 or more, excellent safety may be realized.

Meanwhile, the cylindrical cell according to one embodiment of the present disclosure may be, for example, a battery having a tab-less structure that does not include an electrode tab, but is not limited thereto.

In the structure of the tab-less structure battery, for example, each of the positive electrode plate and the negative electrode plate may include an uncoated portion in which the active material layer is not formed. The uncoated portions of the positive electrode plate and the negative electrode plate may be located at the top and bottom of the electrode assembly, respectively. Current collecting plates may be coupled to the uncoated portion of the positive electrode plate and the uncoated portion of the negative electrode plate, and the current collecting plate may be connected to an electrode terminal.

The electrolyte usable in the electrode assembly according to the embodiment of the present disclosure may include a salt having a structure such as A⁺B⁻, which is dissolved or dissociated in an organic solvent, but the present disclosure is not limited thereto. A⁺ includes alkali metal cations such as Li⁺, Na⁺, or K⁺, or ions composed of a combination thereof, and B⁻ includes anions such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or ions composed of a combination thereof. The organic solvent includes propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (g-butyrolactone), or a mixture thereof. The injection of the electrolyte may be performed in an appropriate step in the battery manufacturing process depending on the manufacturing process and required properties of the final product. That is, the injection of the electrolyte may be applied before the battery is assembled or in the final step of assembling the battery.

FIG. 4 is a view for explaining a battery pack 300 including a cylindrical battery cell 100 according to one embodiment of the present disclosure. Referring to FIG. 4, the battery pack 300 according to one embodiment of the present disclosure includes a battery assembly and a pack housing 302 that accommodates the battery assembly. In the battery assembly, cylindrical batteries 301 each of which includes the above-mentioned separator according to one embodiment of the present disclosure are electrically connected. In the drawing of the present disclosure, for convenience of illustration of the drawing, components such as a busbar for electrical connection, a cooling unit, and a power terminal are omitted.

In one embodiment of the present disclosure, the battery pack 300 may be mounted on a vehicle. The vehicle may be, for example, an electric vehicle, a hybrid vehicle, or a plug-in hybrid vehicle. The vehicle includes a four-wheel vehicle or a two-wheel vehicle.

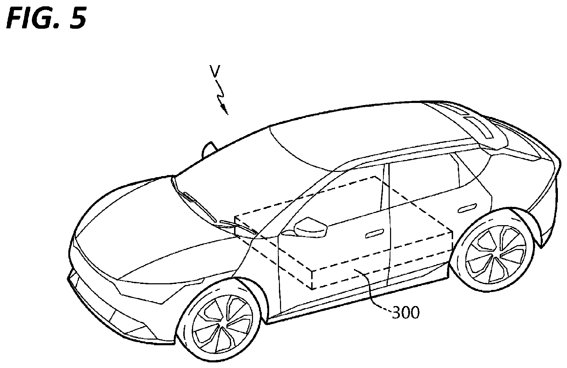

FIG. 5 is a view for explaining a vehicle including the battery pack 300 of FIG. 4.

Referring to FIG. 5, a vehicle V according to one embodiment of the present disclosure includes the battery pack 300 according to one embodiment of the present disclosure. The vehicle V operates when power is supplied from the battery pack 300 according to one embodiment of the present disclosure.

Hereinafter, the present disclosure will be described in more detail through examples, but the following examples are intended to illustrate the present disclosure. The scope of the present disclosure is not limited by only these examples.

For example, in the following Example 1, a method of manufacturing a separator having a thickness of about 13 µm by forming porous coating layers on both surfaces of a porous polymer substrate will be exemplary described.

### Example 1

### Production of porous polymer substrate

A porous polymer substrate was produced by a polyethylene material having a weight average molecular weight of 600,000 g/mol. The porous polymer substrate was manufactured by stretching the material in the longitudinal direction (MD direction) such that the total width became 500 mm, the length (winding length) became 4 m, and thicknesses measured at both ends became 10 µm and 8 µm, respectively. That is, in manufacturing the porous polymer substrate, a portion from one end (between both ends of the porous polymer substrate) to one point (any point between both ends) (hereinafter, also referred to as a first portion) had a fixed thickness of 10 µm, whereas a portion from one point to the other end (hereinafter, also referred to as a second portion) had a thickness that decreased toward the other end such that the thickness at the other end became 8 µm.

### Formation of porous coating layer

A slurry was prepared by mixing water as a dispersion medium, 94 parts by weight of alumina (D₅₀ = 500 nm) as inorganic particles, 2.5 parts by weight of a polyacrylic acid-based dispersant, 0.5 parts by weight of a wetting agent, and 3 parts by weight of an acrylate-based binder. The slurry was coated and dried on both surfaces of the porous polymer substrate by using a doctor blade method so as to form porous coating layers on both surfaces of the porous polymer substrate. Here, the loading amount of the porous coating layer was 6.2 g/m². In the manufactured separator, both surfaces of the porous polymer substrate having a thickness of 10 µm were coated with porous coating layers each having a thickness of 1.5 µm. Then, on both surfaces of the porous polymer substrate having a thickness of 8 µm, porous coating layers each having a thickness of 2.5 µm were formed. That is, in the formation of the porous coating layer, each of the thicknesses of the porous coating layers coated on both surfaces of the first portion of the porous polymer substrate having a thickness of 10 µm was fixed (1.5 µm). Then, since the thickness of the second portion of the porous polymer substrate decreased toward the other end and the thickness at the other end became 8 µm, each of the thicknesses of the porous coating layers coated on both surfaces of the second portion increased toward the other end and then the thickness at the other end became 2.5 µm.

The separator manufactured by the present Example 1 has a fixed thickness of 13 µm throughout.

The separator manufactured in this manner had one end A and the other end A' in the longitudinal direction, and a point B was present between one end A and the other end A'. The thickness of the separator was constantly maintained from one end A to the other end A'. In a region AB from one end A to the point B, the thicknesses of the porous polymer substrate and the porous coating layers were constantly maintained. In a region BA' from the point B to the other end A', the thickness of the porous polymer substrate was decreased toward the other end A', and the thicknesses of the porous coating layers were increased toward the other end A'. Here, in the region BA' from the point B to the other end A', the thickness of the porous polymer substrate was linearly decreased, and the thicknesses of the porous coating layers were linearly increased.

Also, the length from one end A to the point B was 40% relative to the length of 100% in the longitudinal direction of the separator, and the thickness of the porous polymer substrate at the other end A' was 80% relative to the thickness of the porous polymer substrate of 100% at one end A.

Also, the content of the porous coating layer in the region BA' was 200 parts by weight relative to the porous coating layer of 100 parts by weight in the region AB, and the content of the porous coating layer was 50 parts by weight relative to the porous polymer substrate of 100 parts by weight.

### Manufacturing of electrode assembly and cylindrical battery cell

The separator, and a positive electrode of 17 ea and a negative electrode of 16 ea were disposed such that the positive electrode and the negative electrode were across the upper and lower surfaces of the separator. The positive electrode and the negative electrode had a burr at one end during a slitting process. Here, the point where the end of the positive electrode was located on one side and the point where the end of the negative electrode was located on the other side were alternately arranged such that they were spaced apart from each other on the plane with a horizontal interval of 3 mm. Through winding, a jelly-roll type electrode assembly was manufactured. As for the positive electrode active material, lithium cobalt oxide LCO was used, and as for the negative electrode active material, graphite was used (N/P ratio > 100).

A positive electrode current collecting plate and a negative electrode current collecting plate were welded to the upper portion and the lower portion of the manufactured jelly-roll type electrode assembly, respectively. Next, the electrode assembly to which the positive electrode current collecting plate and the negative electrode current collecting plate were welded was inserted into a cylindrical battery housing in which an external terminal was pre-installed. Then, the positive electrode current collecting plate and the external terminal were welded, and the edge of the negative electrode current collecting plate was welded to a beading portion. After that, the battery housing was introduced into a chamber of an electrolyte injection device, and the battery housing was raised such that the opening of the battery housing faced the opposite direction to gravity. Subsequently, a non-aqueous electrolyte was prepared by dissolving LiPF₆ in an organic solvent at a concentration of 1.0 M. The organic solvent was prepared by mixing ethylene carbonate (EC), dimethylcarbonate (DMC) and diethyl carbonate (DEC) at a composition of 1:2:1 (volume ratio). Then, the electrolyte was injected through the opening of the battery housing, and then, the pressure in the chamber was increased to 800 kPa for 20 sec and was maintained for 150 sec. The pressure in the chamber was reduced to -90 kPa for 20 sec again and the substantial vacuum state was maintained for 20 sec. After the electrolyte impregnation process was completed, the opening of the battery housing was sealed with a sealing body by using a gasket. Then, the production of the cylindrical cell was completed.

### Comparative Example 1

The manufacturing was performed in the same manner as in Example 1 except that the porous polymer substrate was produced with a fixed thickness of 10 µm and the porous coating layer was coated with a fixed thickness such that the manufactured separator had a thickness of 13 µm in the above Example 1.

### Experimental Example

### Experimental Example 1: friction coefficient experiment

The separators of Example 1 and Comparative Example 1 were measured using friction and wear equipment (Heidon). Repeated friction was applied with 5 g/Dia tip to the side of the separator where the porous coating layer was thick in order to simulate a phenomenon in which the porous coating layer is detached due to shrinkage/expansion of the electrode assembly including the electrode with a burr formed on the surface. After five times, the friction coefficient was checked and is noted in Table 1.

**[Table 1]**

| | Friction coefficient |
|---|---|
| Example 1 | 1.477 |
| Comparative Example 1 | 1.001 |

According to the above Table 1, the friction coefficient of the separator in Example 1 was higher than that in Comparative Example 1. That is, the separator of Example 1 had high resistance to the tip, i.e., high resistance to the burr of the electrode, compared to the separator of Comparative Example 1. Then, the degree of detachment of the porous coating layer, which was generated by repeated shrinkage and expansion of the electrode assembly, was low. Thus, it was confirmed that the durability of the separator is excellent.

Although the present disclosure has been described above with reference to preferred embodiments, those skilled in the art or persons having ordinary knowledge in the relevant technical field will understand that various embodiments of the present disclosure have been described herein for purposes of illustration, and that various modifications and changes may be made without departing from the scope and spirit of the present disclosure. Accordingly, the various embodiments disclosed herein are not intended to be limiting, with the true scope and spirit being indicated by the following claims.

## Claims

1. A separator comprising:
a porous polymer substrate; and
porous coating layers formed on both surfaces of the porous polymer substrate and containing inorganic particles and a binder polymer,
wherein the separator has one end A and the other end A' in the longitudinal direction, and a point B is present between the one end A and the other end A',
a thickness of the separator is constantly maintained from the one end A to the other end A',
in a region AB from the one end A to the point B, thicknesses of the porous polymer substrate and the porous coating layers are constantly maintained, and
in a region BA' from the point B to the other end A', the thickness of the porous polymer substrate is decreased, and the thicknesses of the porous coating layers are increased.

2. The separator according to claim 1, wherein interfaces between the porous polymer substrate and the porous coating layers with respect to a vertical line at a center in the longitudinal direction have asymmetrical shapes.

3. The separator according to claim 1, wherein with respect to a vertical line at the center in the thickness direction of the separator, interfaces between the porous polymer substrate and the porous coating layers have symmetrical shapes.

4. The separator according to claim 1, wherein in the region BA' from the point B to the other end A', the thickness of the porous polymer substrate is linearly decreased, and the thickness of the porous coating layers is linearly increased.

5. The separator according to claim 1, wherein a length from the one end A to the point B is about 10% to 70% relative to a length of 100% in the longitudinal direction of the separator.

6. The separator according to claim 1, wherein the thickness of the porous polymer substrate at the other end A' is about 75% to 95% relative to the thickness of 100% of the porous polymer substrate at the one end A.

7. The separator according to claim 1, wherein a content of the porous coating layers in the region BA' is about 40 parts by weight to 1,300 parts by weight relative to the porous coating layers of 100 parts by weight in the region AB.

8. The separator according to claim 1, wherein a content of the porous coating layers is about 40 parts by weight to 60 parts by weight relative to the porous polymer substrate of 100 parts by weight.

9. The separator according to claim 1, wherein a total length of the separator in the longitudinal direction is about 1.5 m to 5 m.

10. An electrode assembly comprising:
the separator according to claim 1;
a first electrode in contact with one surface of the separator; and
a second electrode in contact with the other surface of the separator,
wherein the first electrode, the separator and the second electrode are wound in a direction of the other end A' of the separator as a winding axis.

11. The electrode assembly according to claim 10, wherein a winding length of the electrode assembly is about 1.5 m to 5 m.

12. The electrode assembly according to claim 10, wherein in the electrode assembly, the first electrode, the separator and the second electrode are stacked in this order.

13. A battery cell in which the electrode assembly according to claim 10 is mounted in a cylindrical battery housing together with an electrolyte.

14. The battery cell according to claim 13, wherein a form factor of the cylindrical battery housing is 46110, 46800, 46950, 48110, 48750 or 48800.
